# EUROPEAN PATENT SPECIFICATION

(11) **EP 3 988 397 B1**
(45) Date of publication and mention of the grant of the patent: **06.12.2023**
(21) Application number: 20382922.1
(22) Date of filing: 23.10.2020
(51) Int. Cl.: B60R 16/023, B60D 1/62, B60R 16/03, B60Q 1/30, H05B 47/18

(54) **ELECTRONIC CONTROL UNIT**
ELEKTRONISCHE STEUEREINHEIT
UNITÉ DE COMMANDE ÉLECTRIQUE

(43) Date of publication of application: 27.04.2022
(73) Proprietor: Enganches Y Remolques Aragon S.L., 50016 Zaragoza (ES)
(72) Inventor: Benito Monreal, Fernando, 50057 ZARAGOZA (ES); González Juanes, Ramiro, 50057 ZARAGOZA (ES)
(74) Representative: ZBM Patents - Zea, Barlocci & Markvardsen

(56) References cited:
- EP-A1- 3 240 260
- WO-A1-2015/065811
- US-A- 5 793 615
- US-B1- 10 688 839

## Description

This disclosure relates to an electronic control unit, ECU, kit for controlling an auxiliary illumination system depending on a main illumination system of a vehicle. The present disclosure further relates to a method of controlling an auxiliary illumination system depending on a main illumination system of a vehicle through said ECU kit, and to a computer program suitable for performing such a method.

### BACKGROUND

There exist towing systems that act as an interface or coupling between a vehicle with a main illumination system and an auxiliary structure with an auxiliary illumination system which is towable by the vehicle through the towing system. Examples of such towable auxiliary structures are house trailers, mobile homes, truck trailers, wagons, containers, caravans, etc.

Since towing hitches are installed in automobiles, it has been necessary to transfer lighting functions from the main illumination system (of the vehicle) to the auxiliary illumination system (of the towing or towable auxiliary structure). This requires unfolding these functions and send the voltage to the pilot lights of both the vehicle and the towing. Different types of electrical wiring exist for that purpose, such as, e.g., Universal and Specific configurations.

In Universal configurations, the cables for towing service are connected directly with those of the vehicle by means of quick connectors, e.g., one for each lighting function. In Specific configurations, the wiring for towing service is connected to those of the vehicle through specific connectors for each vehicle model or directly to Can-Bus lines of the vehicle.

The continuous development of the automotive sector has entailed the incorporation of new electronic systems designed to improve, e.g., comfort and safety in the vehicle, and this implies a considerable increase in wiring in the vehicle. To solve problems arising from that, car manufacturers use various electronic systems (Can-Bus, Multiplexed, PWM, Thin-section cables...) or to control electrical consumption in the vehicle (Check-Control... ).

Can Bus Data may be defined as a protocol for transmission of digital information between different devices in the vehicle, wherein a Main Control Unit manages any element of the vehicle, both for security and comfort or engine management.

Information flows through, e.g., a pair of twisted cables linking all the communication nodes forming the electronic system (including the main illumination system) of the vehicle. It is thus possible to increase the functions in vehicles by reducing the number of cables that are necessary for their operation.

US5793615A discloses a replaceable card (figure 1) connectable (ports 2a and 2b in figure 1) with an electronic control unit, ECU, the replaceable card being configured to receive main digital signals through a CAN bus (claim 1) from a main illumination system of a vehicle (column 2, lines 27-48).

US10688839B1 discloses a nose box insert configured to deliver real-time status of components in a tractor trailer such as the various operating lamps required by law. The insert may be configured to continuously monitor voltage and current usage of the various lamps, sensors, and other circuits in the trailer. A control circuit in the nose box insert may be configured or programmed to detect gradual changes in the operation of the trailer, or sudden failures of important components, and wirelessly report this information in real time to a remote system.

An object of the present disclosure is to provide new systems, methods and computer programs aimed at improving current manners of controlling an auxiliary illumination system depending on a main illumination system of a vehicle.

### SUMMARY

In a first aspect, as defined in claim 1, an electronic control unit (ECU) kit is provided for controlling an auxiliary illumination system depending on a main illumination system of a vehicle. The ECU kit comprises an ECU and a replaceable card being connectable with each other. The replaceable card is configured to receive one or more main digital signals from the main illumination system through a CAN bus. The ECU comprises a connector module configured to implement a connection between the ECU and the replaceable card, and a processor module configured to read the received one or more main digital signals, and to generate one or more first auxiliary signals depending on said one or more main digital signals to control the auxiliary illumination system at least partially based on the generated one or more first auxiliary signals.

Such a proposed ECU kit conforms a very versatile mean/way of controlling auxiliary lighting system depending on main lighting system of a vehicle, since the ECU may be the same for all types of vehicle configurations. That is, the same ECU configuration may be used with any type of vehicle configuration by simply connecting proper replaceable card with the ECU. One replaceable card or another may be used whenever the selected card satisfies corresponding specificities of the particular vehicle where the kit of ECU and card is to be used.

In some examples, the ECU may further comprise an analog module configured to receive one or more main analog signals from the main illumination system, and the processor module may be configured to read the received one or more main analog signals, and to generate one or more second auxiliary signals depending on said one or more main analog signals to control the auxiliary illumination system further based on the generated one or more second auxiliary signals. As described in other parts of the description, if no replaceable card is found connected with the ECU, full analog mode may be performed through the analog module or, otherwise (card is connected), the ECU may operate in full digital mode or in combined digital-analog mode. Versatility of the ECU is thus improved with this feature.

In some configurations, the processor module may be configured to read the received one or more main analog signals as ON-OFF signals and/or based on pulse-width modulation, PWM. The processor module may be configured to read (all or part of) the one or more main analog signals based on PWM by calculating (corresponding) PWM values and determining, for each of said PWM values, whether the PWM value corresponds to one or other main analog signal depending on whether the PWM value is above or below a PWM threshold. The processor module may be configured to calculate the PWM threshold for distinguishing between two of the main analog signals by calculating first dominant PWM value for a first of the two main analog signals and second dominant PWM value for a second of the two main analog signals, and averaging said first and second dominant PWM values. PWM-based manners of reading main analog signals may be very valuable when a single connection/cable/wire is used to transmit main analog signals.

In some implementations, one of the main digital signals and one of the main analog signals may correspond to same light function in the vehicle, and the processor module may be configured to verify whether said one of the main digital signals and said one of the main analog signals substantially correspond to same value for said same light function in the vehicle. Reliability of the ECU is improved with such a feature, which may be seen as a digital-analog checker of main signals (from main lighting system). If main signals of same light function digitally and analogically processed result in divergent/discrepant (too different) values, it may be determined that something is malfunctioning or, otherwise, good reliability may be confirmed.

The processor module may be further configured to read from a memory in the replaceable card data denoting a model of the vehicle and/or a standard to which the CAN bus corresponds. In these configurations, the processor module may be configured to read the received one or more main digital signals depending on the model of the vehicle and/or the CAN bus standard, and/or to generate the one or more first auxiliary signals further depending on the model of the vehicle and/or the CAN bus standard.

According to examples, the processor module may comprise a communication module configured to implement a wireless communication between the processor module and another device or devices. This communication may be very useful to, e.g., configure or customize the processor module from, e.g., smartphone, tablet, laptop or any portable (or even non-portable) computing device.

In some implementations, the processor module may be further configured to write data from the auxiliary illumination system to be sent to the main illumination system by (or through) the replaceable card via CAN bus. Said feature further improves versatility of the ECU, since operational data may be sent from auxiliary to main lighting system, such as e.g. feedback to main digital and/or analog signals, status of some component(s) of the auxiliary illumination system, instructions to be executed by the main illumination system, etc.

The replaceable card may comprise a memory, such as, e.g., an electrically erasable programmable read-only memory (EEPROM) storing or being configured to store data denoting a model of the vehicle and/or a standard to which the CAN bus corresponds. This memory may include, for example, a wireless module configured to implement a wireless communication between the memory and another device or devices. This wireless module may be, for example, a Near Field Communication (NFC) module.

The replaceable card may be, for example, insertable in a groove or female coupling part of the ECU.

In a further aspect, as defined in claim 12, a method is provided for controlling an auxiliary illumination system depending on a main illumination system of a vehicle through an electronic control unit (ECU) kit including an ECU and a replaceable card connectable with each other. The method comprises receiving, by the replaceable card connected with the ECU, one or more main digital signals from the main illumination system through a CAN bus, and reading, by a processor module in the ECU, the received one or more main digital signals. The method further comprises generating, by the processor module, one or more first auxiliary signals depending on the one or more main digital signals to control the auxiliary illumination system at least partially based on the generated one or more first auxiliary signals.

In a yet further aspect, as defined in claim 13, a computer program is provided comprising program instructions for causing a computing system to perform such a method of controlling an auxiliary illumination system. The computer program is embodied on a storage medium and/or carried on a carrier signal.

### BRIEF DESCRIPTION OF THE DRAWINGS

Non-limiting examples of the present disclosure will be described in the following, with reference to the appended drawings, in which:
Figure 1 schematically illustrates an external view of an ECU and a replaceable card connectable therewith for controlling an auxiliary illumination system depending on a main illumination system of a vehicle, according to examples.
Figure 2 is a block diagram schematically illustrating electronics of an ECU according to examples.
Figure 3 is a block diagram schematically illustrating electronics of a replaceable card according to examples.
Figure 4 is a flow chart schematically illustrating methods of controlling an auxiliary illumination system depending on a main illumination system of a vehicle through an ECU and replaceable card connected therewith, according to examples.
Figure 5 is a flow chart schematically illustrating methods of controlling an auxiliary illumination system depending on a main illumination system of a vehicle through an ECU with or without replaceable card connected thereto, according to examples.

### DETAILED DESCRIPTION OF EXAMPLES

In these figures the same reference signs have been used to designate same or similar elements.

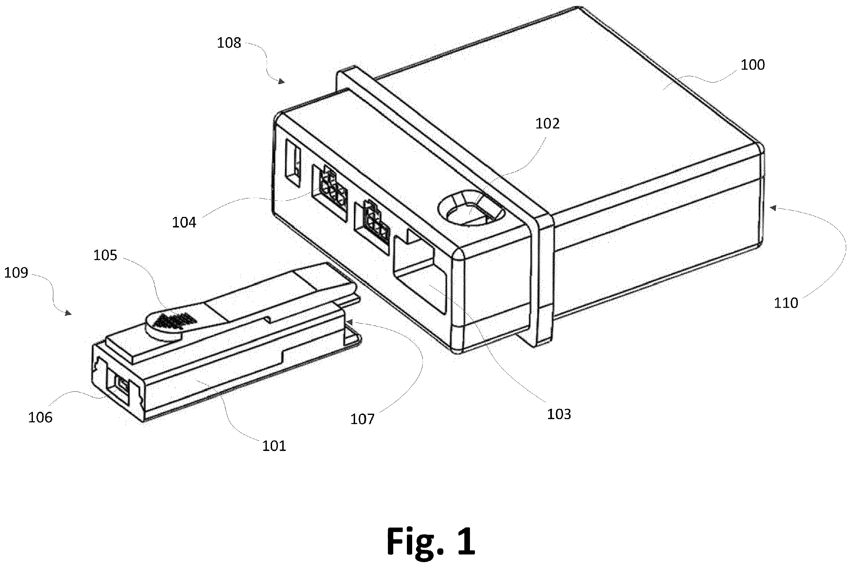

Figure 1 schematically illustrates an external view of an ECU 108 and a replaceable card 109 connectable therewith for controlling an auxiliary illumination system depending on a main illumination system of a vehicle, according to examples. As shown in the figure, ECUs 108 according to present disclosure may include a protecting case or cover 100 configured to protect the interior of the ECU, e.g., whole electronics in the ECU 108. ECUs 108 may further comprise a groove or female coupling part 103 into which replaceable card 109 is insertable. ECUs 108 may still further include analog port/line or ports/lines 104 for analog connections with main illumination system of the vehicle. ECUs 108 may yet further comprise an opening 102 for a user to interact with replaceable card 109 when inserted into or coupled with the ECU 108. Opening 102 may permit the user to access a push element 105 of the replaceable card 109 through, e.g., a finger. Opening 102 may be configured to fit the push element 105 in a way that the replaceable card 109 is stably fixed within female coupling part 103. This stable fixation may ensure that inner connectors (not shown) of the ECU 108 and connectors 107 of the replaceable card 109 electrically contact to each other. ECUs 108 may additionally comprise connection port/line or ports/lines 110 for electrical coupling of the ECU 108 with/to auxiliary illumination system.

Replaceable cards 109 according to present disclosure may include a CAN bus connection port/line 106 for connecting the replaceable card 109 with CAN bus of the vehicle, so that main digital signal(s) are receivable by the replaceable card 109 through said connection port/line 106. As commented before, replaceable cards 109 may comprise a push element 105 which, once the replaceable card 109 is completely inserted within female part 103, the push element 105 may fit within opening 102. Such a fitting may be based on, e.g., a click-based fitting or coupling. Once said fitting has occurred and, therefore, the replaceable card 109 and the ECU 108 are stably connected with each other, this may cause that connectors 107 of the replaceable card 109 and connectors (not shown) of the ECU 108 are in electrical contact and, hence, the ECU 108 may start receiving main digital signal(s) from the main illumination system of the vehicle through CAN bus. The fitting of the push element 105 within the opening 102 may be undone by the user pushing the push element 105 to thereby uninstalling/extracting the replaceable card 109 from the ECU 108. Replaceable cards 109 may still further include, for example, a guiding element 101 configured to facilitate introduction/coupling of the replaceable card 109 into groove or female part 103 of the ECU 108. This guiding element 101, which may be, e.g., at a lateral side of the replaceable card 109, may also ensure stable fixation of replaceable card 109 within ECU 108.

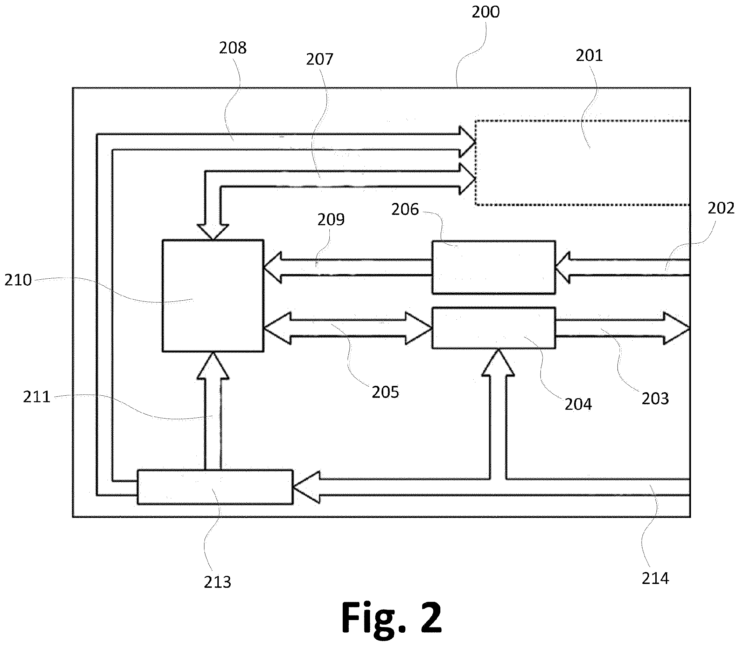

Figure 2 is a block diagram schematically illustrating electronics of an ECU 200 according to examples, with the aim of controlling an auxiliary illumination system depending on a main illumination system of a vehicle. As illustrated, ECUs 200 according to present disclosure may comprise a connector module 201 and a processor module 210. The connector module 201 may be configured to implement a connection between the ECU 200 and a replaceable card configured to receive main digital signal(s) from the main illumination system through CAN bus. The processor module 210, such as, e.g., a microcontroller, may be configured to read the main digital signal(s) received by the replaceable card. The processor module 210 may be further configured to generate first auxiliary signal(s) depending on said main digital signal(s) to control the auxiliary illumination system at least partially based on the generated first auxiliary signal(s). The processor module 210 may be configured to read the main digital signal(s) received by the replaceable card 201 through, e.g., a signal and data bus 207 connecting the processor 210 and the (installed/inserted) card 201 with each other.

ECUs 200 according to present disclosure may further comprise an analog module 202, 206 configured to receive main analog signal(s) from the main illumination system. In this case, the processor module 210 may be further configured to read the received main analog signal(s) through the analog module 202, 206. The processor 210 may be further configured to generate second auxiliary signal(s) depending on said main analog signal(s) to control the auxiliary illumination system further based on the generated second auxiliary signal(s). The analog module 202, 206 may comprise, e.g., a vehicle light input port/line 202 configured to receive the main analog signal(s) from the main illumination system of the vehicle. The analog module 202, 206 may further comprise, e.g., voltage adapters 206 configured to adapt the received main analog signal(s) so that they result understandable and processable by the processor 210. The processor 210 may read the received main analog signal(s) through suitable signal bus 209 connecting voltage adapters 206 and processor 210 with each other.

The processor module 210 may be configured to output first auxiliary signal(s) derived from main digital signal(s) and/or second auxiliary signal(s) derived from main analog signal(s) through, e.g., a light control bus 205 connecting the processor module 210 and a light power stage module 204 with each other. Such a light power stage 204 may be configured to condition the first and/or second auxiliary signal(s) from the processor module 210, and to output the conditioned first and/or second auxiliary signal(s) through a light power output 203 towards the auxiliary illumination system. This conditioning of the first and/or second auxiliary signal(s) may include any known electrical treatment of the first and/or second auxiliary signal(s) so that they result understandable and processable by the auxiliary illumination system. The light power stage 204 may include, e.g., a digital-to-analog (D/A) converter configured to transform digital first and/or second auxiliary signal(s) from the processor 210 into analog first and/or second auxiliary signal(s) to be processed by the auxiliary illumination system.

A main voltage input port/line 214 may be configured to receive power from the vehicle to electrically feed different components of the ECU 200 that need to be powered. The main voltage line 214 may be configured to supply power from the vehicle to, e.g., the processor module 210, and/or the light power stage 204, and/or the (installed/inserted) card 201, etc. Such a power from the vehicle may be regulated by, e.g., main voltage regulator(s) 213, so that said regulated power may be then supplied to the processor module 210 through suitable connection 211 between the regulator(s) 213 and the processor 210. Proper connection 208 between regulator(s) 213 and connector 201 may also exist for the regulator(s) 213 to supply regulated power to the (installed/inserted) card 201.

The processor module 210 may be configured to read the received main analog signal(s) as ON-OFF signals and/or based on pulse-width modulation (PWM). In the latter case, the processor 210 may be configured to calculate PWM values (from received main analog signals) and determining, for each of the PWM values, whether the PWM value corresponds to one or other main analog signal depending on a difference between the PWM value and a PWM threshold. The processor 210 may be further configured to calculate or estimate the PWM threshold for distinguishing between two main analog signals. Said calculation/estimation may include determining a first dominant PWM value for one of the two main analog signals and a second dominant PWM value for the other of the two main analog signals, and averaging said first and second dominant PWM values. Said average PWM value may be used as the PWM threshold in a way that if a PWM value or values are generally above or below the PWM threshold, said PWM value or values may be determined as corresponding to one or another main analog signal. If more than two main analog signals are to be identified through PWM, first and second PWM thresholds may be estimated and used in a way that PWM value(s) above first PWM threshold correspond to one of the main analog signals, PWM value(s) between first and second PWM thresholds correspond to another of the main analog signals, and PWM value(s) below second PWM threshold correspond to a further of the main analog signals. Same principle/approach may be applied for any number of different main analog signals. This PWM-based manner of reading main analog signals may be very useful when a single connection/cable/wire is used to transmit main analog signals.

ECUs 200 according to present disclosure may be configured to process (in the terms expressed above) only main digital signals (full digital mode), only main analog signals (full analog mode), or main digital and analog signals (combined mode). In such a combined mode, a main digital signal and a main analog signal may correspond to same light function in the vehicle. In this case, the processor 210 may be configured to verify whether said main digital signal and main analog signal substantially correspond to same value for said same light function in the vehicle. This approach may permit detecting failures if, for example, main digital signal and main analog signal that are supposed to be the same light function produce discrepant values for first and second auxiliary signals. Said discrepancy may be determined depending on whether a difference between said values is above or below a difference threshold. If above, the difference may be excessive and, therefore, an error may be occurring. If below, the difference may be acceptable and, therefore, no error is occurring.

In examples, the processor 210 may be configured to read from a memory (e.g., an EEPROM) in the replaceable card data indicating a model of the vehicle and/or a standard to which the CAN bus corresponds. In this case, the processor 210 may be further configured to read the received main digital signal(s) depending on the model of the vehicle and/or on the CAN bus standard, and/or to generate the first auxiliary signal(s) further depending on the model of the vehicle and/or on the CAN bus standard. In other words, once the vehicle model and/or CAN bus standard have been obtained, the processor 210 may be self-configured according to particularities and/or requirements corresponding to the vehicle model and/or CAN bus standard.

The processor module 210 may further comprise a communication module (e.g., an NFC module) configured to implement a wireless communication between the processor module 210 and another device or devices. This communication may be very useful to transmit data from an external device (e.g., a smartphone) to the processor 210 such that it may be self-configured depending on said data from the external device. Such data wirelessly transmitted to the processor 210 may define, e.g., particularities and/or requirements corresponding to the vehicle model and/or CAN bus standard.

The processor module 210 may be further configured to write data from the auxiliary illumination system to be sent to the main illumination system by the replaceable card through CAN bus. This data may be supplied by the processor 210 to the replaceable card 201 through the signal and data bus 207, and subsequently sent by the replaceable card 201 to the auxiliary illumination system. This data may comprise, e.g., feedback to main digital and/or analog signals, status of some component(s) of the auxiliary illumination system, instructions to be executed by the main illumination system, etc.

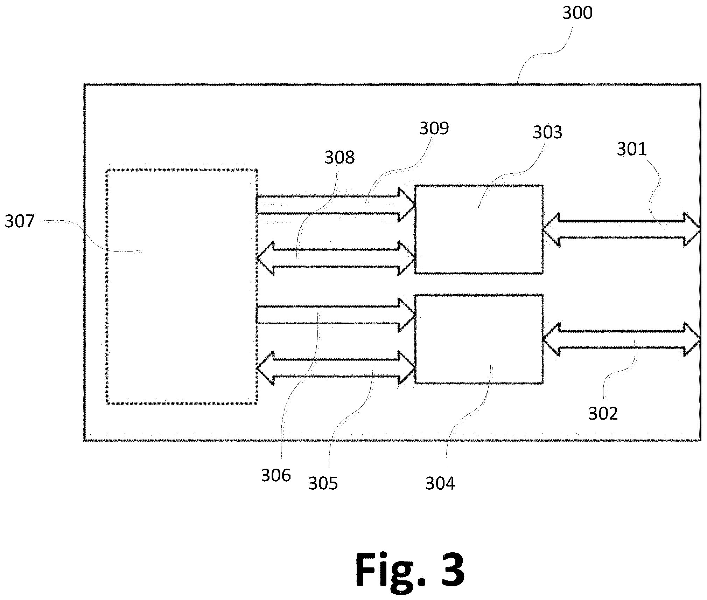

Figure 3 is a block diagram schematically illustrating electronics of a replaceable card 300 according to examples. Replaceable cards 300 may be connectable with ECUs 200 (Figure 2) according to present disclosure and configured to receive main digital signal(s) through CAN bus from a main illumination system of a vehicle. Different aspects described with respect ECUs 200 and its interaction with replaceable cards 300 (201 in Figure 2) may be equally or similarly applicable to replaceable cards 300 according to Figure 3.

Replaceable cards 300 according to present disclosure may comprise a memory 304 that may store or may be configured to store data denoting a model of the vehicle and/or a standard to which the CAN bus corresponds. This memory 304 may include, e.g., an electrically erasable programmable read-only memory, EEPROM. The memory 304 may further include a wireless module (e.g., a Near Field Communication, NFC, module) configured to implement a wireless communication between the memory and another device or devices. This communication may be very useful to configurate the replaceable card 300 from an external device (e.g., a smartphone) with, e.g., particularities and/or requirements corresponding to a model of the vehicle and/or CAN bus standard. In the particular example illustrated, memory and wireless module are shown within same module 304, but they may be separate modules.

Once connected with (or inserted in) corresponding ECU 200, replaceable cards 300 may be configured to receive power supply from the ECU 200 as explained with reference to, e.g., Figure 2. As schematically illustrated, replaceable cards 300 may include a main card 307 which may be configured to control (or manage) different components forming the replaceable card 300. The main card 307 may be configured to, e.g., receive power supply from ECU 200 and, in said case, to forward said power to memory 304 through power connection 306 between main card 307 and memory 304, and/or to a CAN bus transceiver 303 through power connection 309 between main card 307 and CAN bus transceiver 303.

Main card 307 may be configured to interchange data with memory 304 through data bus 305 implementing data connection between main card 307 and data bus 305, and/or with CAN bus transceiver 303 through data bus 308 implementing data connection between main card 307 and CAN bus transceiver 303. Memory-NFC module 304 may be configured to receive and/or interchange data with external device (e.g., smartphone) through corresponding wireless (e.g. NFC) port/line 302. CAN bus transceiver 303 may be configured to receive main digital signals from (and/or to generally interchange CAN bus data/signals with) the main illumination system through corresponding CAN bus port/line 301.

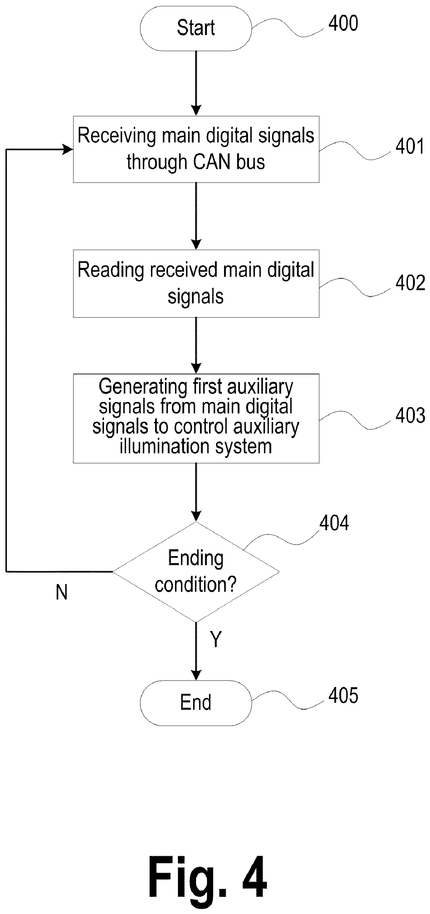

Figure 4 is a flow chart schematically illustrating methods of controlling an auxiliary illumination system depending on a main illumination system of a vehicle through a kit of ECU and replaceable card, according to examples. As generally shown in the figure, such "controlling" methods may be initiated (e.g. at method block 400) upon detection of a starting condition such as, e.g., a user request for starting the method, or initiation of data/signal reception, or turning on of the vehicle, etc. Since methods according to Figure 4 are performable by kits of ECU and replaceable card according to previous figures, number references from said figures may be reused in following description of Figure 4.

Controlling methods may further include (e.g. at method block 401) receiving, by the replaceable card 300 connected with the ECU 200, main digital signal(s) from the main illumination system through CAN bus. Since this functionality implementable at, e.g., method block 401 is performable by the replaceable card 300 connected with the ECU 200, functional details and considerations explained in this respect with reference to previous figures may thus be similarly attributed to method block 401.

Controlling methods may further include (e.g. at method block 402) reading, by a processor module 210 in the ECU 200, the received main digital signal(s). This functionality implementable at, e.g., method block 402 may be performed by, e.g., processor module such as module 210 described with reference to previous figures. Functional details and considerations explained about this function with respect to previous figures may thus be similarly attributed to method block 402.

Controlling methods may still further include (e.g. at method block 403) generating, by the processor module 210, first auxiliary signal(s) depending on the main digital signal(s) to control the auxiliary illumination system at least partially based on the generated first auxiliary signal(s). This functionality implementable at, e.g., method block 403 may be performed by, e.g., processor module such as module 210 described with reference to previous figures. Functional details and considerations explained about this function with respect to previous figures may thus be similarly attributed to method block 403.

Controlling methods may yet further include (e.g. at decision block 404) verifying whether an ending condition is satisfied. In case of positive or true result (Y) of said verification, the method may proceed to method block 405 to terminate execution of the method. Otherwise (N), the method may loop back to previous method block 401 to receive new main digital signal(s) and thereby performing a new iteration of the method. Ending condition satisfaction may be determined by detecting, e.g., a user request for ending the method, or cease of data/signal reception, or turning off of the vehicle, etc.

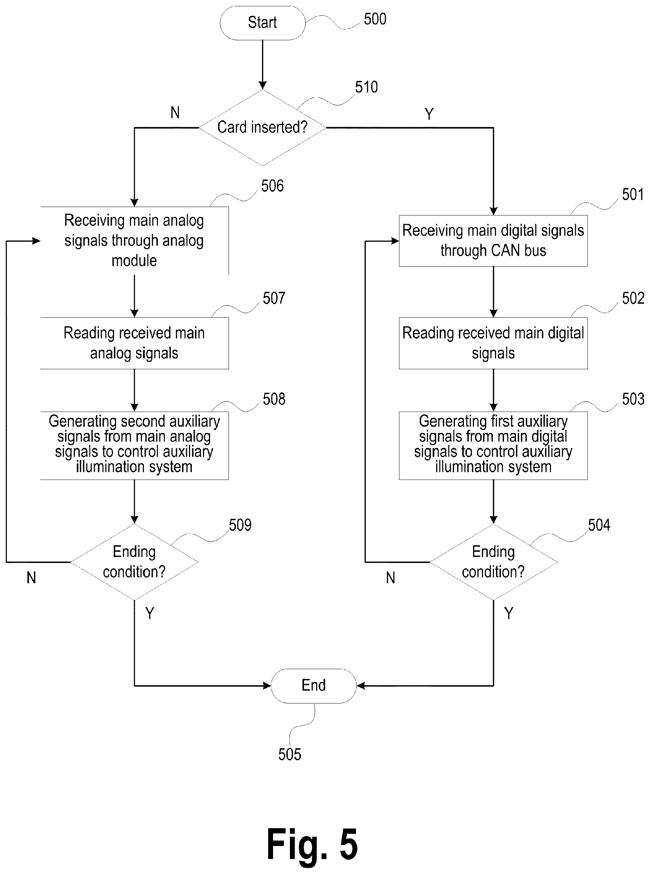

Figure 5 is a flow chart schematically illustrating methods of controlling an auxiliary illumination system depending on a main illumination system of a vehicle through an ECU 200 with or without replaceable card 300 connected thereto, according to examples. These "controller" methods may be seen as including what is denominated herein as full digital mode if replaceable card 300 is connected with ECU 200, and as full analog mode if no replaceable card 300 is connected with ECU 200. Method blocks 500 - 505 may be equal or similar to method blocks 400 - 405 of Figure 4, respectively. Method blocks 506 - 509 may be similar to method blocks 501 - 504, respectively, with a difference residing in that blocks 506 - 509 exclusively process main analog signals (full analog mode) instead of the main digital signals (full digital mode) exclusively processed by blocks 501 - 504. Another difference with respect methods according to previous figures may reside in decision block 510 which may verify whether CAN bus replaceable card 300 is connected with ECU 200, in which case transition to block 501 may be undertaken to perform full digital mode or, otherwise, transition to block 506 may be undertaken to perform full analog mode. As commented in other parts of the description, combined digital-analog mode is also possible when main illumination system produces both main digital signal(s) and main analog signal(s) that may be taken into account by the ECU 200 to control the auxiliary illumination system depending thereon.

As used herein, the term "module" may be understood to refer to software, firmware, hardware and/or various combinations thereof. It is noted that the modules are exemplary. The modules may be combined, integrated, separated, and/or duplicated to support various applications. Also, a function described herein as being performed by a particular module may be performed by one or more other modules and/or by one or more other devices instead of or in addition to the function performed by the described particular module.

The modules may be implemented across multiple devices, associated or linked to corresponding methods of controlling an auxiliary illumination system proposed herein, and/or to other components that may be local or remote to one another. Additionally, the modules may be moved from one device and added to another device, and/or may be included in both devices, associated to corresponding methods of controlling an auxiliary illumination system proposed herein. Any software implementations may be tangibly embodied in one or more storage media, such as, e.g., a memory device, a floppy disk, a compact disk (CD), a digital versatile disk (DVD), or other devices that may store computer code.

The methods of controlling an auxiliary illumination system according to present disclosure may be implemented by computing means, electronic means or a combination thereof. The computing means may be a set of instructions (e.g. a computer program) and then the methods of controlling an auxiliary illumination system may comprise a memory and a processor, embodying said set of instructions stored in the memory and executable by the processor. These instructions may comprise functionality or functionalities to execute corresponding methods of controlling an auxiliary illumination system such as, e.g., the ones described with reference to the figures.

In case the methods of controlling an auxiliary illumination system are implemented only by electronic means, a controller of the system may be, for example, a CPLD (Complex Programmable Logic Device), an FPGA (Field Programmable Gate Array) or an ASIC (Application-Specific Integrated Circuit).

In case the methods of controlling an auxiliary illumination system are a combination of electronic and computing means, the computing means may be a set of instructions (e.g. a computer program) and the electronic means may be any electronic circuit capable of implementing corresponding method-steps of the methods of controlling an auxiliary illumination system proposed herein, such as the ones described with reference to figures.

The computer program(s) may be embodied on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing the methods of controlling an auxiliary illumination system according to present disclosure. The carrier may be any entity or device capable of carrying the computer program(s).

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program(s) is/are embodied in a signal that may be conveyed directly by a cable or other device or means, the carrier may be constituted by such cable or other device or means. Alternatively, the carrier may be an integrated circuit in which the computer program(s) is/are embedded, the integrated circuit being adapted for performing, or for use in the performance of, the methods of controlling an auxiliary illumination system proposed herein.

## Claims

1. An electronic control unit ECU kit for controlling an auxiliary illumination system depending on a main illumination system of a vehicle, the ECU kit comprising an ECU (108; 200) and a replaceable card (109; 201; 300) being connectable with each other; wherein:
the replaceable card (109; 201; 300) is configured to receive one or more main digital signals from the main illumination system through a CAN bus; and wherein the ECU (108; 200) includes:
a connector module (201) configured to implement a connection between the ECU (108; 200) and the replaceable card (109; 201; 300), and
a processor module (210) configured to read the received one or more main digital signals, and to generate one or more first auxiliary signals depending on said one or more main digital signals to control the auxiliary illumination system at least partially based on the generated one or more first auxiliary signals.

2. An ECU kit according to claim 1, wherein the ECU further comprises an analog module (202, 206) configured to receive one or more main analog signals from the main illumination system; and wherein
the processor module (210) is configured read the received one or more main analog signals, and to generate one or more second auxiliary signals depending on said one or more main analog signals to control the auxiliary illumination system further based on the generated one or more second auxiliary signals.

3. An ECU kit according to claim 2, wherein the processor module (210) is configured to read the received one or more main analog signals as ON-OFF signals and/or based on pulse-width modulation, PWM.

4. An ECU kit according to claim 3, wherein the processor module (210) is configured to read the one or more main analog signals based on PWM by calculating PWM values and determining, for each of the PWM values, whether the PWM value corresponds to one or other main analog signal depending on whether the PWM value is above or below a PWM threshold.

5. An ECU kit according to claim 4, wherein the processor module (210) is configured to calculate the PWM threshold for distinguishing between two of the main analog signals by calculating first dominant PWM value for a first of the two main analog signals and second dominant PWM value for a second of the two main analog signals, and averaging said first and second dominant PWM values.

6. An ECU kit according to any of claims 3 to 5, wherein a main digital signal and a main analog signal correspond to same light function in the vehicle, and the processor module (210) is configured to verify whether said main digital signal and main analog signal substantially correspond to same value for said same light function in the vehicle.

7. An ECU kit according to any of claims 1 to 6, wherein the processor module (210) is configured to read from a memory (304) in the replaceable card data denoting a model of the vehicle and/or a standard to which the CAN bus corresponds.

8. An ECU kit according to claim 7, wherein the processor module (210) is configured to read the received one or more main digital signals depending on the model of the vehicle and/or on the CAN bus standard, and/or to generate the one or more first auxiliary signals further depending on the model of the vehicle and/or on the CAN bus standard.

9. An ECU kit according to any of claims 1 to 8, wherein the processor module (210) comprises a communication module configured to implement a wireless communication between the processor module (210) and another device or devices.

10. An ECU kit according to any of claims 1 to 9, wherein the replaceable card comprises a memory (304) storing data denoting a model of the vehicle and/or a standard to which the CAN bus corresponds.

11. An ECU kit according to claim 10, wherein the memory (304) in the replaceable card includes a wireless module configured to implement a wireless communication between the memory (304) and another device or devices.

12. A method of controlling an auxiliary illumination system depending on a main illumination system of a vehicle through an electronic control unit ECU kit including an ECU and a replaceable card connected with each other, the method comprising:
receiving (401), by the replaceable card connected with the ECU, one or more main digital signals from the main illumination system through a CAN bus;
reading (402), by a processor module (210) in the ECU, the received one or more main digital signals; and
generating (403), by the processor module (210), one or more first auxiliary signals depending on the one or more main digital signals to control the auxiliary illumination system at least partially based on the generated one or more first auxiliary signals.

13. A computer program comprising program instructions, stored in a storage medium, for causing a computing system to perform a method according to claim 12 of controlling an auxiliary illumination system.

## Patentansprüche

1. Ein Kit für ein Steuergerät (oder ECU, engl. *electronic control unit*, = Steuergerät) zum Steuern eines Hilfsbeleuchtungssystems in Abhängigkeit von einem Hauptbeleuchtungssystem eines Fahrzeugs, wobei das Steuergerät-Kit ein Steuergerät (108; 200) und eine austauschbare Karte (109; 201; 300) umfasst, die miteinander verbindbar sind; wobei:
die austauschbare Karte (109; 201; 300) dazu konfiguriert ist, ein oder mehrere digitale Hauptsignale von dem Hauptbeleuchtungssystem über einen CAN-Bus zu empfangen; und wobei das Steuergerät (108; 200) Folgendes beinhaltet:
ein Verbindermodul (201), das dazu konfiguriert ist, eine Verbindung zwischen dem Steuergerät (108; 200) und der austauschbaren Karte (109; 201; 300) zu implementieren, und
ein Prozessormodul (210), das dazu konfiguriert ist, das empfangene eine oder die empfangenen mehreren digitalen Hauptsignale zu lesen und ein oder mehrere erste Hilfssignale in Abhängigkeit von dem einen oder den mehreren digitalen Hauptsignalen zu erzeugen, um das Hilfsbeleuchtungssystem zumindest teilweise auf Grundlage des erzeugten einen oder der erzeugten mehreren ersten Hilfssignale zu steuern.

2. Ein Steuergerät-Kit nach Anspruch 1, wobei das Steuergerät ferner ein Analogmodul (202, 206) umfasst, das konfiguriert ist, um ein oder mehrere analoge Hauptsignale von dem Hauptbeleuchtungssystem zu empfangen; und wobei
das Prozessormodul (210) konfiguriert ist, um das empfangene eine oder die empfangenen mehreren analogen Hauptsignale zu lesen und ein oder mehrere zweite Hilfssignale in Abhängigkeit von dem einen oder den mehreren analogen Hauptsignalen zu erzeugen, um das Hilfsbeleuchtungssystem ferner auf Grundlage des erzeugten einen oder der mehreren zweiten Hilfssignale zu steuern.

3. Ein Steuergerät-Kit nach Anspruch 2, wobei das Prozessormodul (210) dazu konfiguriert ist, das eine oder die mehreren empfangenen analogen Hauptsignale als EIN-AUS-Signale und/oder auf Grundlage von Pulsweitenmodulation, PWM, zu lesen.

4. Ein Steuergerät-Kit nach Anspruch 3, wobei das Prozessormodul (210) dazu konfiguriert ist, das eine oder die mehreren analogen Hauptsignale auf Grundlage von PWM zu lesen, indem PWM-Werte berechnet werden und für jeden der PWM-Werte bestimmt wird, ob der PWM-Wert einem oder einem anderen analogen Hauptsignal entspricht, in Abhängigkeit davon, ob der PWM-Wert über oder unter einem PWM-Schwellenwert liegt.

5. Ein Steuergerät-Kit nach Anspruch 4, wobei das Prozessormodul (210) dazu konfiguriert ist, den PWM-Schwellenwert zum Unterscheiden zwischen zwei der analogen Hauptsignale zu berechnen, indem der erste dominante PWM-Wert für ein erstes der zwei analogen Hauptsignale und der zweite dominante PWM-Wert für ein zweites der zwei analogen Hauptsignale berechnet werden und der erste und der zweite dominante PWM-Wert gemittelt werden.

6. Ein Steuergerät-Kit nach einem der Ansprüche 3 bis 5, wobei ein digitales Hauptsignal und ein analoges Hauptsignal derselben Lichtfunktion in dem Fahrzeug entsprechen und das Prozessormodul (210) konfiguriert ist, um zu überprüfen, ob das digitale Hauptsignal und das analoge Hauptsignal im Wesentlichen demselben Wert für dieselbe Lichtfunktion in dem Fahrzeug entsprechen.

7. Ein Steuergerät-Kit nach einem der Ansprüche 1 bis 6, wobei das Prozessormodul (210) konfiguriert ist, um aus einem Speicher (304) in den austauschbaren Kartendaten zu lesen, die ein Modell des Fahrzeugs und/oder einen Standard bezeichnen, dem der CAN-Bus entspricht.

8. Ein Steuergerät-Kit nach Anspruch 7, wobei das Prozessormodul (210) konfiguriert ist, um das eine oder die mehreren empfangenen digitalen Hauptsignale in Abhängigkeit von dem Modell des Fahrzeugs und/oder dem CAN-Bus-Standard auszulesen und/oder das eine oder die mehreren ersten Hilfssignale auch in Abhängigkeit von dem Modell des Fahrzeugs und/oder dem CAN-Bus-Standard zu erzeugen.

9. Ein Steuergerät-Kit nach einem der Ansprüche 1 bis 8, wobei das Prozessormodul (210) ein Kommunikationsmodul umfasst, das konfiguriert ist, um eine drahtlose Kommunikation zwischen dem Prozessormodul (210) und einer anderen Vorrichtung oder anderen Vorrichtungen zu implementieren.

10. Ein Steuergerät-Kit nach einem der Ansprüche 1 bis 9, wobei die austauschbare Karte einen Speicher (304) umfasst, der Daten speichert, die ein Modell des Fahrzeugs und/oder einen Standard angeben, dem der CAN-Bus entspricht.

11. Ein Steuergerät-Kit nach Anspruch 10, wobei der Speicher (304) in der austauschbaren Karte ein drahtloses Modul beinhaltet, das konfiguriert ist, um eine drahtlose Kommunikation zwischen dem Speicher (304) und einer anderen Vorrichtung oder Vorrichtungen zu implementieren.

12. Ein Verfahren zum Steuern eines Hilfsbeleuchtungssystems in Abhängigkeit von einem Hauptbeleuchtungssystem eines Fahrzeugs durch ein Steuergerät-Kit, das ein Steuergerät und eine austauschbare Karte beinhaltet, die miteinander verbunden sind, wobei das Verfahren Folgendes umfasst:
empfangen (401) eines oder mehrerer digitaler Hauptsignale von dem Hauptbeleuchtungssystem durch die austauschbare Karte, die mit dem Steuergerät verbunden ist, über einen CAN-Bus;
lesen (402) des einen oder der mehreren digitalen Hauptsignale durch ein Prozessormodul (210) in dem Steuergerät; und
erzeugen (403) eines oder mehrerer erster Hilfssignale durch das Prozessormodul (210) in Abhängigkeit von dem einen oder den mehreren digitalen Hauptsignalen, um das Hilfsbeleuchtungssystem zumindest teilweise auf Grundlage des erzeugten einen oder der mehreren ersten Hilfssignale zu steuern.

13. Ein Computerprogramm umfassend Programmanweisungen, die in einem Speichermedium gespeichert sind, um ein Rechensystem zu veranlassen, ein Verfahren nach Anspruch 12 zum Steuern eines Hilfsbeleuchtungssystems durchzuführen.

## Revendications

1. Un kit d'ECU (anglais : *electronic control unit*, = unité de commande électronique) pour commander un système d'éclairage auxiliaire en fonction d'un système d'éclairage principal d'un véhicule, le kit d'ECU comprenant une ECU (108 ; 200) et une carte remplaçable (109 ; 201 ; 300) pouvant être connectées l'une à l'autre ; dans lequel :
la carte remplaçable (109 ; 201 ; 300) est configurée pour recevoir un ou plusieurs signaux numériques principaux du système d'éclairage principal par l'intermédiaire d'un bus CAN ; et dans lequel l'ECU (108 ; 200) comprend :
un module de connecteur (201) configuré pour mettre en oeuvre une connexion entre l'ECU (108 ; 200) et la carte remplaçable (109 ; 201 ; 300), et
un module de processeur (210) configuré pour lire le ou les signaux numériques principaux reçus, et pour générer un ou plusieurs premiers signaux auxiliaires en fonction dudit ou desdits signaux numériques principaux pour commander le système d'éclairage auxiliaire au moins en partie sur la base du ou des premiers signaux auxiliaires générés.

2. Un kit d'ECU selon la revendication 1, dans lequel l'ECU comprend en outre un module analogique (202, 206) configuré pour recevoir un ou plusieurs signaux analogiques principaux provenant du système d'éclairage principal ; et dans lequel
le module de processeur (210) est configuré pour lire le ou les signaux analogiques principaux reçus, et pour générer un ou plusieurs seconds signaux auxiliaires en fonction dudit ou desdits signaux analogiques principaux pour commander le système d'éclairage auxiliaire en outre sur la base du ou des seconds signaux auxiliaires générés.

3. Un kit d'ECU selon la revendication 2, dans lequel le module de processeur (210) est configuré pour lire le ou les signaux analogiques principaux reçus en tant que signaux de MARCHE-ARRÊT et/ou sur la base d'une modulation de largeur d'impulsion, PWM.

4. Un kit d'ECU selon la revendication 3, dans lequel le module de processeur (210) est configuré pour lire le ou les signaux analogiques principaux sur la base de PWM en calculant des valeurs PWM et en déterminant, pour chacune des valeurs PWM, si la valeur PWM correspond à l'un ou l'autre signal analogique principal selon que la valeur PWM est supérieure ou inférieure à une valeur de seuil de PWM.

5. Un kit d'ECU selon la revendication 4, dans lequel le module de processeur (210) est configuré pour calculer la valeur de seuil de PWM pour faire la distinction entre deux des signaux analogiques principaux en calculant la première valeur PWM dominante pour un premier des deux signaux analogiques principaux et la seconde valeur PWM dominante pour un second des deux signaux analogiques principaux, et en faisant la moyenne desdites première et seconde valeurs PWM dominantes.

6. Un kit d'ECU selon l'une quelconque des revendications 3 à 5, dans lequel un signal numérique principal et un signal analogique principal correspondent à la même fonction d'éclairage dans le véhicule, et le module de processeur (210) est configuré pour vérifier si ledit signal numérique principal et ledit signal analogique principal correspondent sensiblement à la même valeur pour ladite même fonction d'éclairage dans le véhicule.

7. Un kit d'ECU selon l'une quelconque des revendications 1 à 6, dans lequel le module de processeur (210) est configuré pour lire dans une mémoire (304) dans les données de carte remplaçables indiquant un modèle du véhicule et/ou une norme à laquelle le bus CAN correspond.

8. Un kit d'ECU selon la revendication 7, dans lequel le module de processeur (210) est configuré pour lire le ou les signaux numériques principaux reçus en fonction du modèle du véhicule et/ou de la norme de bus CAN, et/ou pour générer le ou les premiers signaux auxiliaires en fonction du modèle du véhicule et/ou de la norme de bus CAN.

9. Un kit d'ECU selon l'une quelconque des revendications 1 à 8, dans lequel le module de processeur (210) comprend un module de communication configuré pour mettre en oeuvre une communication sans fil entre le module de processeur (210) et un ou plusieurs autres dispositifs.

10. Un kit d'ECU selon l'une quelconque des revendications 1 à 9, dans lequel la carte remplaçable comprend une mémoire (304) stockant des données indiquant un modèle du véhicule et/ou un standard auquel le bus CAN correspond.

11. Un kit d'ECU selon la revendication 10, dans lequel la mémoire (304) dans la carte remplaçable comprend un module sans fil configuré pour mettre en oeuvre une communication sans fil entre la mémoire (304) et un ou plusieurs autre(s) dispositif(s).

12. Un procédé de commande d'un système d'éclairage auxiliaire en fonction d'un système d'éclairage principal d'un véhicule par le biais d'un kit d'ECU (unité de commande électronique) comprenant une ECU et une carte remplaçable connectées l'une à l'autre, le procédé comprenant :
recevoir (401), par le biais de la carte remplaçable connectée à l'ECU, un ou plusieurs signaux numériques principaux provenant du système d'éclairage principal par l'intermédiaire d'un bus CAN ;
lire (402), par le biais d'un module de processeur (210) dans l'ECU, le ou les signaux numériques principaux reçus ; et
générer (403), par le biais du module de processeur (210), un ou plusieurs premiers signaux auxiliaires en fonction du ou des signaux numériques principaux pour commander le système d'éclairage auxiliaire au moins en partie sur la base du ou des premiers signaux auxiliaires générés.

13. Un programme informatique comprenant des instructions de programme, stockées dans un support de stockage, pour amener un système informatique à exécuter un procédé selon la revendication 12 consistant à commander un système d'éclairage auxiliaire.
